# EUROPÄISCHE PATENTSCHRIFT

(11) **EP 2 173 026 B1**
(45) Veröffentlichungstag und Bekanntmachung des Hinweises auf die Patenterteilung: **24.07.2019**
(21) Anmeldenummer: 09169125.3
(22) Anmeldetag: 01.09.2009
(51) Int. Cl.: H02M 3/335

(54) **Schaltwandler und Verfahren zum Betreiben des Schaltwandlers**
Converter and method for operating the converter
Convertisseur et procédé de fonctionnement du convertisseur

(30) Priorität: 02.10.2008 AT 15482008
(43) Veröffentlichungstag der Anmeldung: 07.04.2010
(73) Patentinhaber: Siemens Aktiengesellschaft, 80333 München (DE)
(72) Erfinder: Portisch, Daniel, 2130, Mistelbach (AT)
(74) Vertreter: Maier, Daniel Oliver

(56) Entgegenhaltungen:
- EP-A1- 0 419 724
- EP-A1- 0 419 728
- DE-A1- 10 347 193
- DE-A1-102004 047 697
- DE-T2- 69 810 625
- US-A- 5 359 652
- US-A1- 2006 284 567

## Beschreibung

Die Erfindung betrifft einen Schaltwandler, eine Hauptwicklung, eine PWM-Steuerung und ein Schaltelement umfassend, wobei das Schaltelement in einem diskontinuierlichen Modus (DCM) quasiresonat schaltet. Des Weiteren betrifft die Erfindung ein Verfahren zum Betreiben eines Schaltwandlers im diskontinuierlichen Modus.

"Quasi" bedeutet dabei "teilweise" oder "so in etwa". Bei der Implementierung quasiresonanten Schaltens wird der vorhandene LC-Schwingkreis eines pulsweitenmodulierten (PWM) Wandlers genutzt. Dies führt dazu, dass die Resonanzeffekte des LC-Schwingkreises die Schaltflanken "abschwächen" können. Diese weniger schnellen Übergänge reduzieren dann wiederum die Schaltverluste und die Störabstrahlung, welche bei hart schaltenden Wandlern auftreten. Da der Resonanzkreis nur während der Schaltübergänge an einem ansonsten herkömmlichen Rechtecksignalwandler eingesetzt wird, bezeichnet man dieses Schalten "quasiresonant".

Ein Schaltelement wie beispielsweise ein Feldeffekttransistor (MOSFET) enthält verschiedene parasitäre Kapazitäten. Diese entstehen primär aus dem physischen Aufbau des Bauteils. Sie lassen sich einfach ausdrücken als Eingangskapazität und Ausgangskapazität. Dabei ist die Eingangskapazität die Summe aus der Gate-Source-Kapazität und der Gate-Drain-Kapazität, die Ausgangskapazität ist die Summe aus der Drain-Source-Kapazität und der Drain-Gate-Kapazität. Bei hart schaltenden Wandlern trägt im Wesentlichen die Ausgangskapazität zu den Schaltverlusten bei.

Auch Transformatoren oder Drosseln enthalten parasitäre Kapazitäten, zu denen die Wicklungs- und Lagenkapazität gehört. Diese lassen sich zusammen als einzelner Kondensator auffassen und tragen ebenfalls zu Schaltverlusten bei hart schaltenden Wandlern bei.

Bei einem hart schaltenden Wandler schwingt während der Totzeit im diskontinuierlichen Modus (DCM) die parasitäre Kapazität mit der Hauptwicklung um eine Eingangsspannung bzw. Zwischenkreisspannung. Die Spannung an den parasitären Kapazitäten variiert mit der Schwingung, weist aber durchgehend signifikante Werte auf. Wenn das Schaltelement im nächsten Taktzyklus einschaltet, werden die parasitären Kondensatoren über den Transistor entladen und erzeugen dabei eine hohe Stromspitze. Da diese auftritt, wenn am Schaltelement eine hohe Spannung anliegt, erzeugt sie Schaltverluste. Darüber hinaus ist die Stromspitze reich an Oberwellen, was die EMI erhöht.

Statt mit einem festen Takt zu schalten, kann auch ein Erkennungskreis ein Minimum oder "Tal" der Drain-Source-Spannung des Schaltelements effektiv erfassen und das Schaltelement erst zu diesem Zeitpunkt einschalten. Dadurch wird die Einschaltstromspitze minimiert, da die parasitäre Kapazität auf die Mindestspannung geladen ist. Diese Art des Schaltens wird allgemein als "Talschalten" oder quasiresonantes Schalten bezeichnet.

Eine quasiresonante Topologie nach dem Stand der Technik bildet ein System mit variabler Frequenz, die durch die Leitungs- bzw. Lastbedingung bestimmt wird. Die Schaltfrequenz wird immer so angepasst, dass das Schaltelement immer während des "Tals" eingeschaltet wird - unabhängig von der Last oder Zwischenkreisspannung zu diesem Zeitpunkt. Diese Betriebsart beginnt an der Grenze zwischen kontinuierlichem (CCM) und diskontinuierlichem Leitungsmodus (DCM) und kommt im diskontinuierlichen Leitungsmodus voll zum Tragen.

Für den Fall, dass immer während des ersten "Tals" eingeschaltet wird, steigt mit sinkender Last die Schaltfrequenz, bis im Leerlauf eine Maximalfrequenz erreicht wird. Mit steigender Frequenz steigen jedoch auch die Schaltverluste, da pro Zeiteinheit mehr verlustbringende Schaltvorgänge stattfinden.

Nach dem Stand der Technik kennt man auch Mikrocontroller, welche die Funktion des quasiresonanten Schaltens bereits integriert haben. Mikrokontroller mit einer derartigen Funktionalität sind jedoch teuerer als eine einfache PWM-Steuerung und können daher aus Kostengründen bei vielen Schaltwandlern nicht eingesetzt werden.

Die US2006284567 offenbart einen Sperrwandler mit den Merkmalen des Oberbegriffe der Ansprüche 1 und 8.

Der Erfindung liegt die Aufgabe zugrunde, für einen Schaltwandler der eingangs genannten Art eine Verbesserung gegenüber dem Stand der Technik anzugeben. Eine weitere Aufgabe besteht in der Angabe eines Verfahrens, mit dem der erfindungsgemäße Schaltwandler betrieben wird.

Erfindungsgemäß wird diese Aufgabe gelöst durch einen Schaltwandler gemäß Anspruch 1 und ein Verfahren gemäß Anspruch 8.

Dabei ist zur Erfassung einer Spannung am Schaltelement ein Erkennungskreis vorgesehen, welcher die Durchgänge der Spannung am Schaltelement durch den Spannungsmittelwert erkennt und ein Durchgangssignals ausgibt. Zudem ist eine Sägezahnspannung der PWM-Steuerung mit dem verzögerten und mittels eines Hochpasses gefiltert Durchgangssignal beaufschlagt. Der Mittelwert der Spannung am Schaltelement entspricht in etwa der Eingangsspannung. Einfache PWM-Steuerungen bestimmen einen Einschaltzeitpunkt des Schaltelements in der Weise, das die ansteigende oder abfallende Rampe der Sägezahnspannung einen vorgegebenen Schwellwert erreicht. Erfindungsgemäß treten durch die Beaufschlagung des Sägezahnsignals mit dem verzögerten und Hochpass-gefilterten Durchgangssignal Spannungsspitzen der Sägezahnspannung zu den Zeitpunkten der "Täler" der schwingenden Spannung am Schaltelement auf. Bevor die ansteigende oder abfallende Rampe der auf diese Weise modifizierten Sägezahnspannung den Schwellwert erreicht, übersteigt eine davor auftretende Spannungsspitze diesen Schwellwert und löst damit das Einschalten des Schaltelements zum Zeitpunkt eines "Tals" der schwingenden Spannung am Schaltelement aus. Die Höhe der Spannungsspitzen ist dabei so gewählt, dass immer erst die letzte Spannungsspitze vor einer Schwellwerterreichung der aufsteigenden oder abfallenden Rampe der Sägezahnspannung den Schwellwert übersteigt. Damit bleibt die Schaltfrequenz auch bei einem Absinken der Last annähernd konstant. Da bei geringer Last die Einschaltdauer sehr gering ist, verlängert sich also die Ausschaltdauer, um die Schaltfrequenz annähernd konstant zu halten. Die während der Ausschaltdauer durch die "Täler" der schwingenden Spannung am Schaltelement hervorgerufenen Spannungsspitzen sind dabei so dimensioniert, dass die Höhe der Spannungsspitzen in etwa dem Sinuswert der Rampensteigung mal dem zwischen zwei Spannungsspitzen verlaufenden ansteigenden oder abfallenden Rampenabschnitt der Sägezahnspannung entspricht.

Für einen Schaltwandler mit einfacher PWM-Steuerung wird durch einen geringen Mehraufwand an Bauteilen kostengünstiges quasiresonantes Schalten mit annähernd gleichbleibender Frequenz über einen weiten Leistungsbereich realisiert. Die Einschaltverluste sind dabei gering, was zu einem guten Wirkungsgrad führt. Zudem ist eine gute Elektromagnetische Verträglichkeit (EMV) gegeben.

In einer vorteilhaften Ausprägung ist eine mit der Hauptwicklung magnetisch gekoppelte Hilfswicklung angeordnet, an welcher der Erkennungskreis eine Hilfsspannung abgreift, welche bei einem Durchgang der Spannung am Schaltelement durch den Mittelwert einen Nulldurchgang aufweist. Dass die Nulldurchgänge der Hilfsspannung immer den Durchgängen der Spannung am Schaltelement durch den Mittelwert entsprechen, gilt auch dann, wenn sich die Eingangsspannung oder die Last ändert. Somit ist eine einfache Erkennung der Durchgänge gegeben.

Dabei ist es günstig, wenn zur Erkennung eines Nulldurchgangs ein Komparator vorgesehen ist, der die Hilfsspannung mit Null Volt vergleicht. Eine andere Möglichkeit, Nulldurchgänge zu erfassen besteht in der Anordnung eines sogenannten CMOS-Gatters, welches den Vorteil einer sehr geringen Verzögerung aufweist.

Eine Nulldurchgangserkennung kann zudem auch mittels einer einfachen Transistorschaltung oder mittels einer digitalen Schaltung, welche die Ausschwingfrequenz sampelt und den Nullpunkt errechnet, erfolgen.

Des Weiteren ist es von Vorteil, wenn zur Erzeugung der Sägezahnspannung ein Oszillatorkondensator zwischen einen Frequenzgeneratoreingang der PWM-Steuerung und ein Bezugspotenzial geschaltet ist und wenn eine Referenzspannung über einen ersten Widerstand an dem Oszillatorkondensator zum Aufladen desselben anliegt. Sobald die Spannung am Frequenzgeneratoreingang einen oberen Schwellwert erreicht, kippt ein Oszillator der PWM-Steuerung intern und entlädt den Oszillatorkondensator wieder, bis ein unterer Schwellwert erreicht ist. Dabei kippt der Oszillator intern erneut und der erste Kondensator wird wieder über den ersten Widerstand geladen.

Vorteilhafterweise ist als Hochpass ein Kondensator in Reihe mit einem zweiten Widerstand angeordnet. Der Ausgang des Hochpasses ist dabei an einen Verbindungspunkt zwischen dem Oszillatorkondensator und einem Fußwiderstand des Oszillatorkondensators angeschlossen. Eine Flanke des Durchgangsignals ruft dadurch in einfache Weise eine Spannungsspitze der Sägezahnspannung hervor.

In einer vorteilhaften Ausprägung der Erfindung ist der Oszillatorkondensator über ein weiteres Schaltelement an den Frequenzgeneratoreingang der PWM-Steuerung geschaltet und dieses weitere Schaltelement ist mit einer Einschaltfreigabeschaltung angesteuert. Diese Einschaltfreigabeschaltung ist dabei mit dem Erkennungskreis zur Bestimmung einer abgeschlossenen Abmagnetisierung des Wickelguts verbunden. Auf diese weise ist sichergestellt, dass die Hauptwicklung vollständig abmagnetisiert, bevor das Schaltelement wieder einschaltet. Ein Einschalten bei nicht vollständiger Abmagnetisierung der Hauptwicklung würde gegebenenfalls hohe Verluste durch einen Reversstrom einer Gleichrichterdiode zur Folge haben.

Erfindungsgemäß ist zum Betreiben eines Schaltwandlers im diskontinuierlichen Modus ein Verfahren vorgesehen, bei dem ein Schaltelement quasiresonant geschaltet wird, indem das Schaltelement dann eingeschaltet wird, wenn eine schwingende Spannung am Schaltelement ein Minimum aufweist. Dabei bestimmt eine PWM-Steuerung die Einschaltzeitpunkte des Schaltelements durch eine Schwellwerterreichung einer Sägezahnspannung und mittels eines Erkennungskreises wird erfasst, wann die schwingende Spannung am Schaltelement den Spannungsmittelwert durchläuft. Ein entsprechendes Durchgangssignal wird verzögert und mittels eines Hochpasses gefiltert der Sägezahnspannung in der Weise überlagert, dass zu den Zeitpunkten eines Minimums der schwingenden Spannung am Schaltelement die Sägezahnspannung eine Spannungsspitze aufweist.

Dabei ist es von Vorteil, wenn zur Erkennung eines Durchganges der mit einer im Wesentlichen gleichbleibenden Periode ausschwingenden Spannung am Schaltelement durch den Spannungsmittelwert ein Nulldurchgang einer an einer mit der Hauptwicklung magnetisch gekoppelten Hilfswicklung anliegenden Hilfsspannung erfasst wird und wenn die Sägezahnspannung mit einer Spannungsspitze eine Viertelperiode nach einem Nulldurchgang beaufschlagt wird. Somit ist sichergestellt, dass die Spannungsspitzen der Sägezahnspannung immer zu den Zeitpunkten eines "Tals", welches eine Viertelperiode nach einem Durchgang auftritt, überlagert werden.

Zudem ist es vorteilhaft, wenn das Durchgangssignal einer Einschaltfreigabeschaltung zugeführt wird und wenn nach jedem Abschalten des Schaltelements mittels Einschaltfreigabeschaltung überprüft wird, ob die Abmagnetisierung der Hauptwicklung abgeschlossen ist. Dabei wird erst nach einer abgeschlossenen Abmagnetisierung der Hauptwicklung die Sägezahnspannung mittels eines weiteren Schaltelements für die PWM-Steuerung freigegeben.

Die Erfindung wird nachfolgend in beispielhafter Weise unter Bezugnahme auf die beigefügten Figuren erläutert. Es zeigen in schematischer Darstellung:
- Fig. 1: Schaltungsanordnung nach dem Stand der Technik
- Fig. 2: Schaltungsanordnung mit Nulldurchgangserkennung
- Fig. 3: Detailschaltung einer Nulldurchgangserkennung
- Fig. 4: Signalverläufe bei niedriger Last
- Fig. 5: Signalverläufe bei niedriger Last im Bereich des Einschaltens
- Fig. 6: Signalverläufe bei hoher Last
- Fig. 7: Signalverläufe bei hoher Last im Bereich des Einschaltens
- Fig. 8: Schaltungsanordnung mit Nulldurchgangserkennung und Abmagnetisierungssperre
- Fig. 9: Detailschaltung einer Nulldurchgangserkennung und Abmagnetisierungssperre
- Fig. 10: Signalverläufe bei Abmagnetisierungssperre
- Fig. 11: Signalverläufe bei Abmagnetisierungssperre im Bereich des Einschaltens

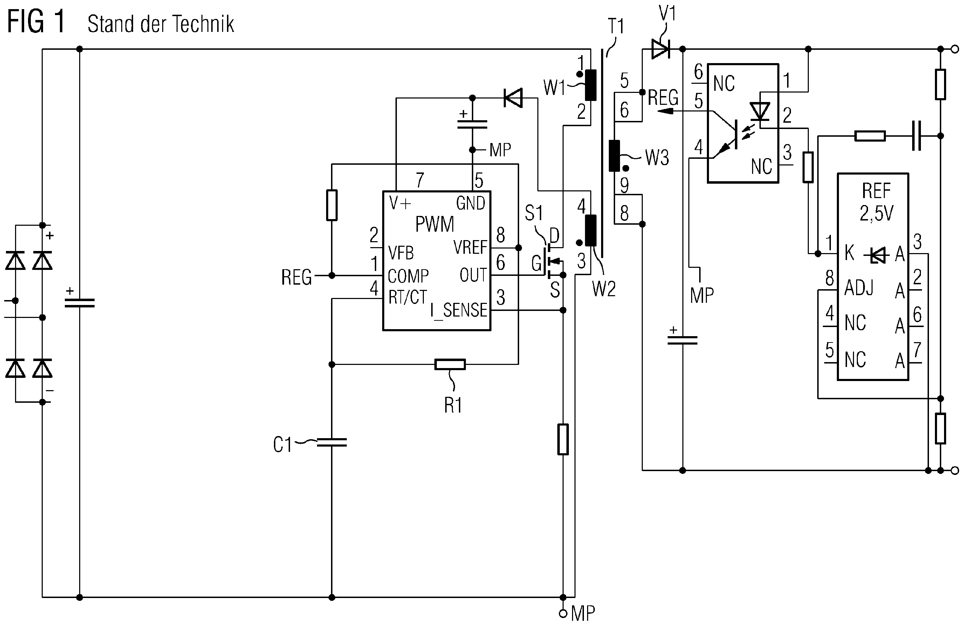

Fig. 1 zeigt beispielhaft einen Sperrwandler, an welchem das Prinzip der Erfindung erläutert wird. In gleicher Weise ist die vorliegende Erfindung für andere Wandlertypen wie Tiefsetzsteller, Hochsetzsteller, Flusswandler etc. anwendbar.

In dem dargestellten Beispiel resultiert die Eingangsspannung für den Wandler aus einer mittels Gleichrichterbrücke und Eingangskondensator gleichgerichteten Wechselspannung.

Eine Hauptwicklung W1 ist beim Sperrwandler als primäre Wicklung eines Transformators T1 ausgebildet. Bei anderen Wandlern wie beispielsweise Hoch- oder Tiefsetzstellern ist die Hauptwicklung W1 als Drosselwicklung ausgebildet.

Die Hauptwicklung W1 ist in Serie mit einem Schaltelement S1 an die Eingangsspannung angeschlossen. Sekundärseitig ist eine Sekundärwicklung W3 angeordnet, an der eine Ausgangsspannung anliegt. Diese Ausgangsspannung wird mittels einer Gleichrichterschaltung, bestehend aus einer Gleichrichterdiode V1 und einem Kondensator, gleichgerichtet und mittels eines Reglers REF erfasst, wobei das Reglerausgangssignal REG über ein Koppelelement an die primärseitige PWM-Steuerung PWM übertragen wird.

Das Schaltelement S1 ist beispielsweise als MOSFET ausgebildet, wobei der Drainanschluss D mit der Hauptwicklung W1 und der Sourceanschluss S mit einem Bezugspotenzial MP verbunden ist. Der Gate-Anschluss G ist mit einem Ausgang OUT der PWM-Steuerung PWM verbunden. Die Versorgung der PWM-Steuerung erfolgt über eine primärseitige Hilfswicklung W2.

Die PWM-Steuerung umfasst einen Compare-Eingang COMP, an dem das Reglerausgangssignal REG anliegt. Das Potenzial dieses Reglerausgangssignals REG wird dabei mittels einer Referenzspannung VREF bestimmt, welche über einen Widerstand an den Compare-Eingang COMP angeschaltet ist. Des Weiteren umfasst die PWM-Steuerung PWM einen Frequenzgeneratoreingang RT/CT, welches mit einem RC-Glied zur Erzeugung einer Sägezahnspannung verbunden ist. Dabei ist eine Seite des Oszillatorkondensators C1 an den Frequenzgeneratoreingang RT/CT und die andere Seite des Oszillatorkondensators C1 an das Bezugspotenzial MP angeschlossen. Zum Aufladen des Oszillatorkondensators C1 ist die eine Seite zudem über einen ersten Widerstand R1 an die Referenzspannung VREF angeschlossen. Die Sägezahnspannung wird in der Weise erzeugt, dass zunächst der Oszillatorkondensator C1 über den Widerstand R1 aufgeladen wird. Erreicht die Spannung am Frequenzgeneratoreingang RT/CT einen oberen Schwellwert, kippt ein Oszillator intern und entlädt den Oszillatorkondensator C1 mit einem vorgegebenen Entladestrom. Wird infolgedessen am Frequenzgeneratoreingang RT/CT ein unterer Schwellwert erreicht, kippt der Oszillator erneut und schaltet den Entladestrom wieder ab. Gleichzeitig wird das Gate-Signal am Ausgang OUT der PWM-Steuerung PWM "high". Es kommt dadurch zum Einschalten des Schaltelements S1.

Eine Abschaltbedingung wird beispielsweise durch den Vergleich des aktuellen Laststromes mit einem vom Regler REF vorgegebenen Abschaltstrom bestimmt. Dabei ist zwischen den Source-Anschluss S des Schaltelements S1 und dem Bezugspotenzial MP ein Shuntwiderstand angeordnet und der Source-Anschluss S des Schaltelements S1 ist mit einem Messeingang I_SENSE der PWM-Steuerung verbunden. Wird die Abschaltbedingung erreicht, wird das Gate-Signal am Ausgang OUT der PWM-Steuerung PWM wieder "low" und das Schaltelement S1 schaltet wieder ab. Zwischenzeitlich lädt sich der Oszillatorkondensator C1 wieder auf, bis der obere Schwellwert erreicht ist und der Vorgang beginnt erneut.

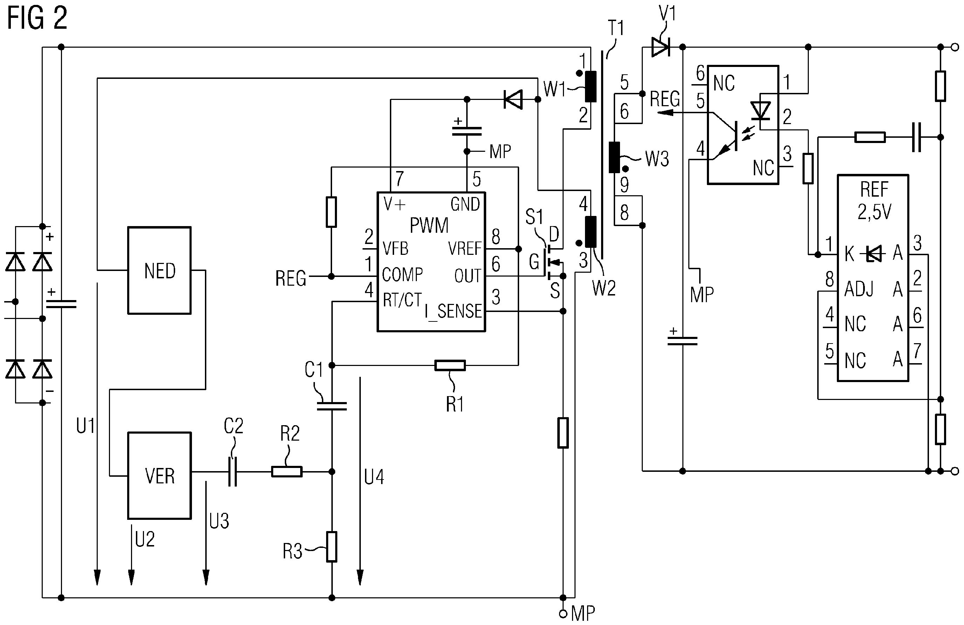

In Fig. 2 ist diese Schaltungsanordnung mit Elementen zum quasiresonanten Schalten ergänzt. Dabei nützt ein Erfassungskreis die magnetische Kopplung zwischen der Hilfswicklung W2 und der Hauptwicklung W1. Bei anderen Wandlern wie Hoch- oder Tiefsetzstellern erfolgt diese Kopplung durch die Anordnung der Haupt- und Hilfswicklung W1, W2 auf einem Drosselkern.

Der Verlauf der an der Hilfswicklung W2 anliegenden Spannung entspricht dem Verlauf der Spannung am Schaltelement S1 (Drain-Source-Spannung bei MOSFETs), wobei das Spannungspotenzial in etwa um den Wert der Eingangsspannung reduziert ist. Ein Durchgang der Spannung am Schaltelement S1 durch den Mittelwert der Ausschwingspannung entspricht somit einem Nulldurchgang der an der Hilfswicklung W2 anliegenden Hilfsspannung U1.

In einer nicht dargestellten Ausführung der Erfindung wird die Phasenlage der Spannung am Schaltelement direkt erfasst und der PWM-Steuerung zum quasiresonanten Schalten zur Verfügung gestellt.

Erfindungsgemäß wird ein Einschaltzeitpunkt des Schaltelements S1 in der Weise bestimmt, dass zum Zeitpunkt eines Spannungsminimums am Schaltelements S1, d.h. zum Zeitpunkt eines "Tals" (oder nahe einem solchen Tal) am Frequenzgeneratoreingang RT/CT ein künstlicher Spannungshub erfolgt. Die Höhe des künstlichen Spannungshubs ist dabei geringer als die Spannungsdifferenz, welche die ansteigende Rampe der Sägezahnspannung während einer Periode der ausschwingenden Spannung am Schaltelement S1 ansteigen würde. Dadurch kann es zu einem früheren Zeitpunkt zum Erreichen der Umschaltschwelle komme, wobei das Schaltelement S1 bei einem Spannungsminimum einschaltet. Die Schaltfrequenz zwischen Leerlauf und Volllast ändert sich dabei nur minimal.

Wie in Fig. 2 dargestellt, wird mittels einer Nulldurchgangserkennung NED aus der Hilfsspannung U1 ein Nulldurchgangssignal U2 abgeleitet. Dieses Nulldurchgangssignal U2 wird zudem um eine viertel Periode der Ausschwingspannung verzögert. Dieses verzögerte Nulldurchgangssignal U3 ist über einen Hochpass, bestehend aus einem Kondensator C2 und einem in Reihe geschalteten zweiten Widerstand R2, in einen Fußwiderstand R3 des Oszillatorkondensators C1 eingespeist. Dadurch wird die Spannung am Frequenzgeneratoreingang RT/CT der PWM-Steuerung PWM angehoben und die obere Schwelle des Oszillators früher erreicht. Ist die geladene Spannung bei einem Minimum der Ausschwingspannung noch zu gering, wird sie bei einer späteren minimalen Spannung am Schaltelement S1 erreicht.

Die Nulldurchgangserkennung NED kann beispielsweise mit einem Komparator, welcher die Hilfsspannung U1 mit Null Volt vergleicht, erfolgen. Eine andere Möglichkeit besteht in der Anordnung eines Komparators, der die Hilfsspannung U1 mit einer positiven oder negativen Spannung vergleicht und auf diese Weise das Nulldurchgangssignal U2 vor- bzw. nacheilend erzeugt. Auch mittels einer einfachen Transistorschaltung ist die Nulldurchgangserkennung durchführbar.

In einer digitalen Schaltung kann die Nulldurchgangserkennung in der Weise erfolgen, dass die Ausschwingfrequenz gesampelt und die Nulldurchgänge errechnet werden.

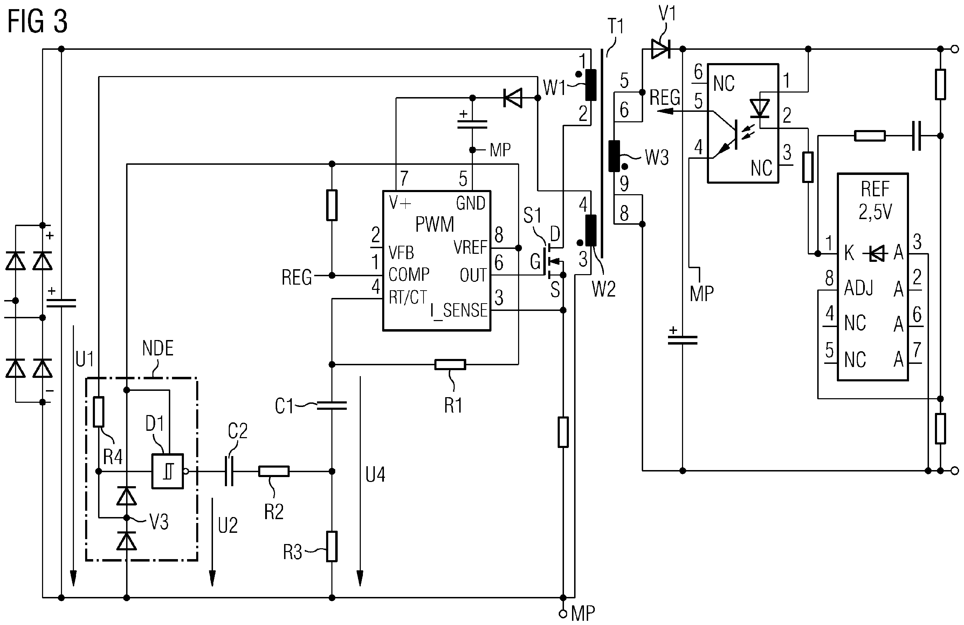

In Fig. 3 ist eine Nulldurchgangserkennung NED mittels eines CMOS-Gatters D1 dargestellt, welches den Vorteil einer sehr geringen Verzögerung aufweist. Dabei wird ein CMOS invertierender Puffer mit Schmitttriggereingang mittels der Referenzspannung VREF versorgt. Da die Hilfsspannung U1 der Hilfswicklung W2 als ein Abbild der Spannung am Schaltelement S1 wesentlich größer sein kann als diese Versorgungsspannung des CMOS-Gatters D1, wird die Hilfsspannung U1 mit einem Widerstand R4 und einer Klemmdiode V3 auf die Versorgungsspannung des CMOS-Gatters D1 begrenzt. Unterschreitet die Hilfsspannung U1 der Hilfswicklung W2 die interne Schwellspannung des CMOS-Gatters D1, wird der Ausgang des CMOS-Gatters D1 positiv und der Nulldurchgang ist somit erkannt.

Die erforderliche Verzögerung um eine Viertelperiode der Ausschwingspannung wird durch die bauteilbedingte Verzögerung der Nulldurchgangserkennung NED und der PWM-Steuerung erreicht. Bei einer sehr hohen Ausschwingspannung, bei der die bauteilbedingte Verzögerung zu groß ist, bietet das CMOS-Gatter D1 durch Vorgabe einer Schwellspannung den Vorteil, dass bereits vor einem Nulldurchgang ein Nulldurchgangssignal erzeugt wird. Auf diese Weise wird eine zu lange bauteilbedingte Verzögerung kompensiert und der Einschaltvorgang des Schaltelements S1 erfolgt wiederum eine Viertelperiode nach einem Nulldurchgang der Hilfsspannung U2.

Die sehr kurze Ansprechzeit des CMOS-Gatters D1 erlaubt zudem, dass Nulldurchgänge der Ausschwingspannung auch bei Frequenzen bis zu einigen MHz genau genug erfasst werden können.

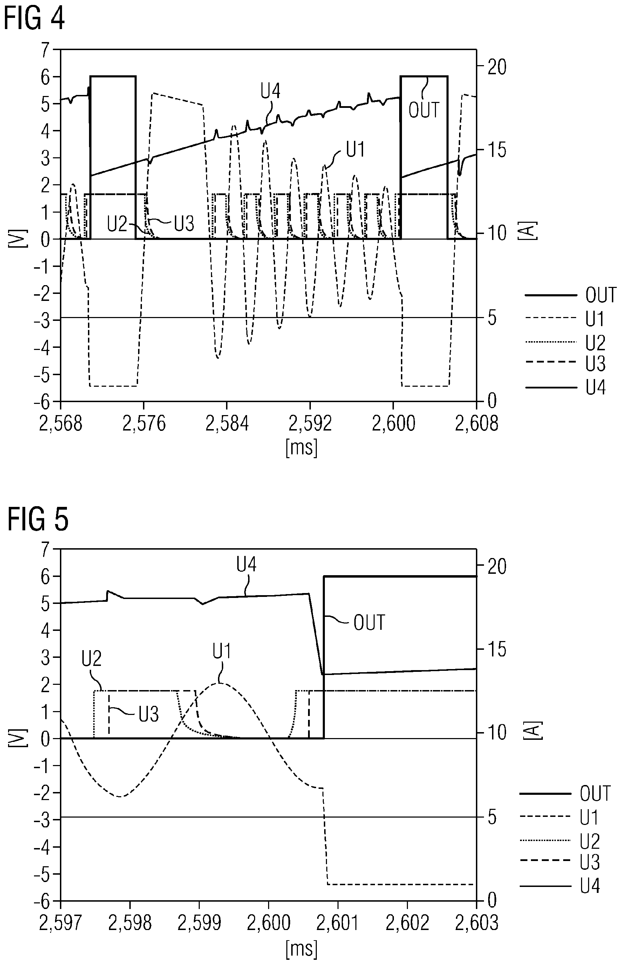

Die Fig. 4 bis 7 zeigen Signalverläufe bei unterschiedlichen Lastverhältnissen, wobei die einzelnen Verläufe zur besseren Darstellbarkeit mit Faktoren multipliziert bzw. durch Faktoren dividiert sind.

In Fig. 4 sind die Signale bei einer niedrigen Last dargestellt. Der Verlauf des Ausgangssignals OUT bestimmt die Schaltvorgänge des Schaltelements S1. Das Schaltelement ist bei "high" eingeschaltet und bei "low" ausgeschaltet. Nach einem Ausschaltvorgang wechselt der Verlauf der Hilfsspannung U1 von einer negativen Spannung in eine positive Spannung.

Der Nulldurchgang erzeugt eine abfallende Flanke des Verlaufs des Nulldurchgangssignals U2. Nach einer Abmagnetisierungsphase beginnt die Spannung am Schaltelement auszuschwingen und entsprechend schwingt die Hilfsspannung U1. Der Nulldurchgang der Hilfsspannung U1 entspricht dabei dem Durchgang der Spannung am Schaltelement S1 durch den Mittelwert der Ausschwingspannung. Zum Zeitpunkt einer Flanke des verzögerten Nulldurchgangssignals U3 tritt im Verlauf der ansteigenden Rampe der Sägezahnspannung U4 eine Spannungsspitze auf. Die Spannungsspitzen kennzeichnen die Maxima und Minima der Ausschwingspannung, wobei die erkannten Spannungsminima zum quasiresonanten Schalten genutzt werden. Nach einer Spannungsspitze klingt das modifiziert Sägezahnsignal U4 infolge des Hochpassfilters wieder auf die ursprüngliche Rampe ab. Dadurch ist sichergestellt, dass nur bei einer positiven Spannungsspitze der obere Schwellwert erreicht wird und das Schaltelement S1 zum Zeitpunkt eines Spannungsminimums einschaltet.

Es versteht sich von selbst, dass das erfindungsgemäße quasiresonante Schalten auch mit umgekehrten Vorzeichen der einzelnen Signale, beispielsweise mit einer abfallenden Rampe des Sägezahnsignals S4, durchführbar ist.

Fig. 5 zeigt die in Fig. 4 dargestellten Signalverläufe zum Zeitpunkt des Einschaltens mit einer kleineren Skalierung der Zeitachse.

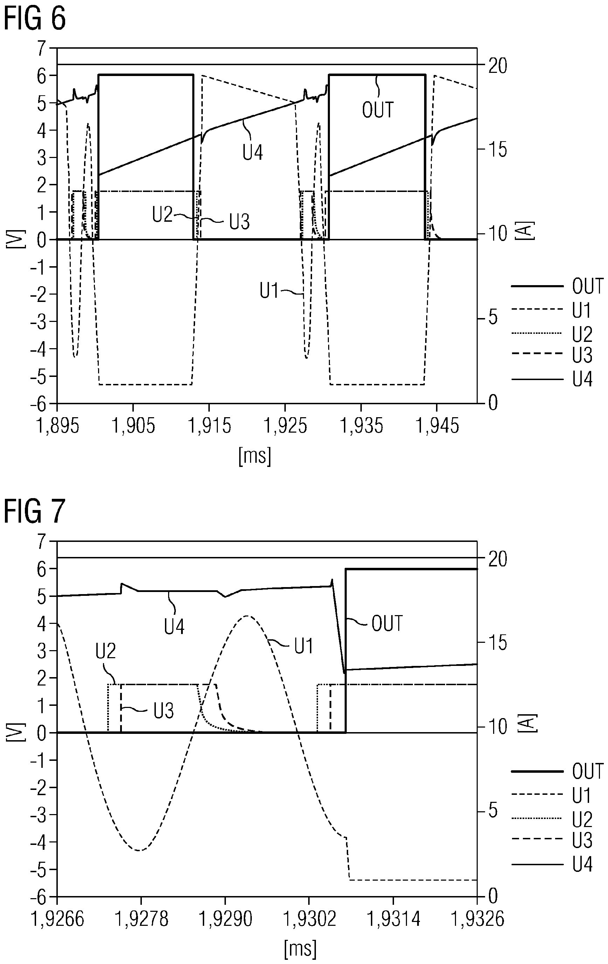

Die Fig. 6 und 7 zeigen die Signalverläufe bei einer höheren Last, wobei die Ausschaltdauer des Schaltelements die Abmagnetisierungszeit nur geringfügig übersteigt. Das Einschalten des Schaltelements S1 erfolgt hier bereits beim zweiten Minimum der Ausschwingspannung.

Um bei einer hohen Last zu vermeiden, dass der Schalttransistor infolge einer Schwellwerterreichung des Oszillators einschaltet, bevor das Wickelgut des Schaltwandlers vollständig abmagnetisiert hat, ist in einer vorteilhaften Ausprägung der Erfindung eine Einschaltfreigabe vorgesehen. Dabei wird der Spannungsanstieg am Frequenzgeneratoreingang RT/CT bis zur vollständigen Abmagnetisierung des Wickelguts verhindert und auf diese Weise ein Reversstrom einer Gleichrichterdiode V1 des Schaltwandlers vermieden.

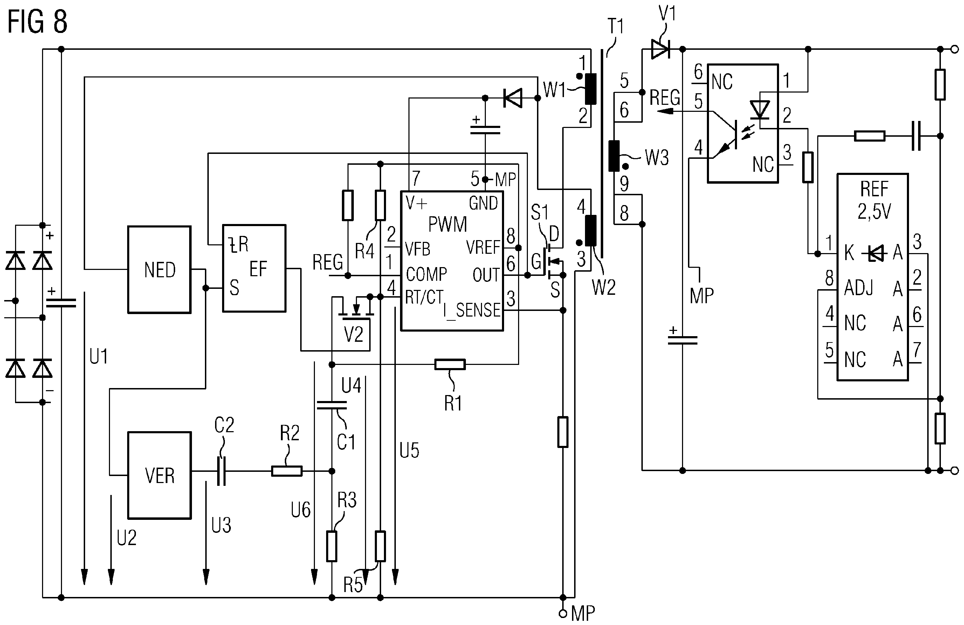

In Fig. 8 ist eine entsprechende Schaltung dargestellt. Das Nulldurchgangssignal U2 ist dabei einer Einschaltfreigabeschaltung EF zugeführt, welche ein weiteres Schaltelement V2 ansteuert. Dieses weitere Schaltelement V2 schaltet die mit den Spannungsspitzen beaufschlagte Sägezahnspannung an den Frequenzgeneratoreingang RT/CT der PWM-Steuerung PWM. Zudem ist der Einschaltfreigabeschaltung EF das Ausgangssignal OUT der PWM-Steuerung PWM zugeführt, damit die Einschaltfreigabe nach jedem Abschaltvorgang des Schaltelements S1 zurückgesetzt wird.

Das Einschaltfreigabesignal U6 am Ausgang der Einschaltfreigabeschaltung EF ist nach dem Zurücksetzen "low". Das mit diesem Signal U6 gesteuerte Schaltelement V2 ist ausgeschaltet und es stellt sich am Frequenzgeneratoreingang RT/CT über einen mittels zweier Widerstande R4/R5 gebildeten Spannungsteiler eine Spannung U5 ein, welche zwischen den beiden Schwellwerten des Oszillators liegt. Die Sägezahnspannung U4 am Oszillatorkondensator C1 kann dann den oberen Schwellwert des Oszillators übersteigen, ohne dass es zum Einschalten des Schaltelements S1 kommt.

Erst wenn das Wickelgut abmagnetisiert hat und ein erster Nulldurchgang erkannt wird, schaltet das Einschaltfreigabesignal U6 auf "high" und das weitere Schaltelement V2 schaltet die mit den Spannungsspitzen beaufschlagte Sägezahnspannung U4 an den Frequenzgeneratoreingang RT/CT. Ist die Sägezahnspannung U4 zwischenzeitlich über den oberen Schwellwert gestiegen, kippt der interne Oszillator und die PWM-Steuerung schaltet das Schaltelement S1 ein. Somit kann die sonst fixe minimale Schaltfrequenz weiter reduziert werden, wodurch ein Einschalten auf eine leitende Gleichrichterdiode V1 des Schaltwandlers vermieden wird.

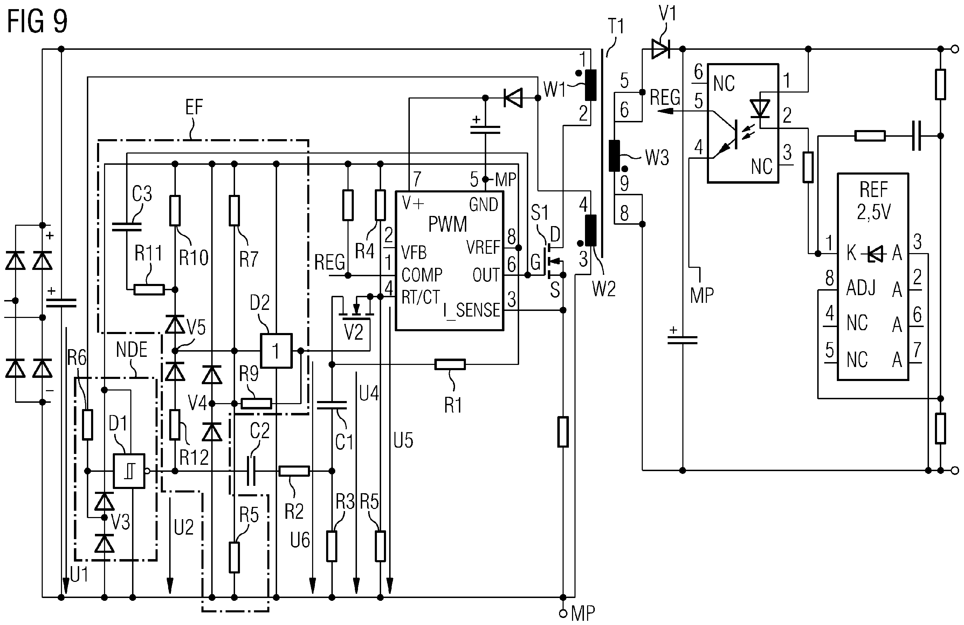

Ein beispielhafter Aufbau der Einschaltfreigabeschaltung EF ist in Fig. 9 dargestellt. Ein weiterer CMOS Puffer D2 mit einer internen Schwelle wird mittels Referenzspannung VREF versorgt. Drei Widerstände R7, R8, R9 bilden dabei eine Hysterese. Ist das Einschaltfreigabesignal U6 am Ausgang des CMOS Puffers D2 "low", bilden diese Hysteresewiderstände R7, R8, R9 eine Spannung am Eingang des CMOS Puffers D2, welche unterhalb der internen Schwelle liegt.

Ist das Einschaltfreigabesignal U6 jedoch "high", bilden die Hysteresewiderstände R7, R8, R9 am Eingang des CMOS Puffers D2 eine Spannung, die über der internen Schwelle liegt.

Ein Zyklus lässt sich wie folgt beschreiben. Zunächst ist das Einschaltfreigabesignal U6 "high". Beim Abschalten des Ausgangsignals OUT der PWM-Steuerung PWM wird die Eingangsspannung des CMOS Puffers D2 über einen Hochpass C3, R11, R10 und eine Diode V5 von einem Wert oberhalb auf einen Wert unterhalb der internen Schwelle des CMOS Puffers D2 gezogen. Der CMOS Puffer D2 kippt dadurch auf "low" und schaltet das weitere Schaltelement V2 ab. Wird von der Nulldurchgangserkennung NDE ein Nulldurchgang erkannt, wird das Nulldurchgangssignal U2 positiv und über einen weiteren Widerstand R12 und die Diode V5 wird die Eingangsspannung des CMOS Puffers D2 wieder auf einen Wert oberhalb der Schwellspannung des CMOS Puffers D2 gezogen. Der CMOS Puffer D2 kippt dadurch auf "high" und schaltet das weitere Schaltelement V2 wieder ein.

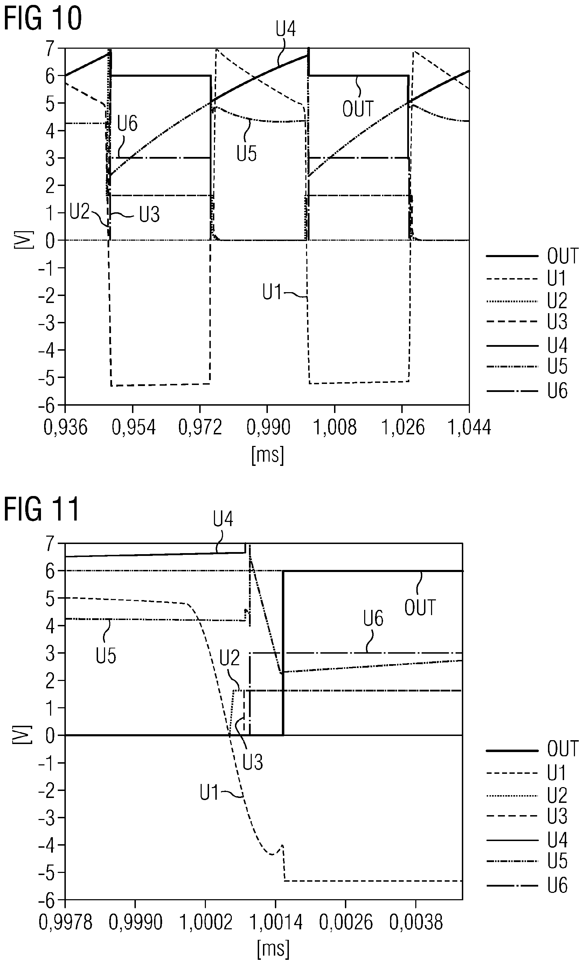

Die entsprechenden Signalverläufe sind in den Fig. 10 und 11 dargestellt, wobei in Fig. 11 mit kleinerer Skalierung der Zeitachse ein Einschaltvorgang gezeigt ist.

Ein Nulldurchgang als Zeichen der vollständigen Abmagnetisierung des Wickelguts löst ein Nulldurchgangssignal U2 und in weiterer Folge ein verzögertes Nulldurchgangssignal U3 aus. Das verzögerte Nulldurchgangssignal U3 schaltet das Einschaltfreigabesignal U6 auf "high", wodurch das weitere Schaltelement eingeschaltet wird und die Spannung U5 am Frequenzgeneratoreingang RT/CT von einem Wert unterhalb der Oszillatorschwelle auf den momentanen Wert der Sägezahnspannung U4 ansteigt. Dabei wird die obere Schwelle überschritten und der interne Oszillator kippt, was zum quasiresonanten Einschalten des Schaltelements S1 im Bereich des ersten Minimums der ausschwingenden Spannung am Schaltelement S1 führt.

## Patentansprüche

1. Schaltwandler, eine Hauptwicklung (W1), eine PWM-Steuerung (PWM) und ein Schaltelement (S1) umfassend, wobei das Schaltelement (S1) in einem diskontinuierlichen Modus quasiresonat schaltet, **dadurch gekennzeichnet, dass** zur Erfassung einer Spannung am Schaltelement (S1) ein Erkennungskreis (NDE) vorgesehen ist, der dazu ausgebildet ist, die Durchgänge der Spannung am Schaltelement (S1) durch den Spannungsmittelwert zu erkennen und ein Durchgangssignal auszugeben, und dass die PWM-Steuerung (PWM) dazu ausgebildet ist, dass eine Sägezahnspannung der PWM-Steuerung (PWM) mit dem durch die bauteilbedingte Verzögerung des Erkennungskreises (NDE) und der PWM-Steuerung (PWM) verzögerten und mittels eines Hochpasses gefilterten Durchgangssignal beaufschlagt wird.

2. Schaltwandler nach Anspruch 1, **dadurch gekennzeichnet, dass** eine mit der Hauptwicklung (W1) magnetisch gekoppelte Hilfswicklung (W2) angeordnet ist, an welcher der Erkennungskreis eine Hilfsspannung (U1) abgreift, welche bei einem Durchgang der Spannung am Schaltelement (S1) durch den Mittelwert einen Nulldurchgang aufweist.

3. Schaltwandler nach Anspruch 2, **dadurch gekennzeichnet, dass** zur Erkennung eines Nulldurchgangs ein Komparator vorgesehen ist, der die Hilfsspannung (U1) mit Null Volt vergleicht.

4. Schaltwandler nach Anspruch 2, **dadurch gekennzeichnet, dass** zur Erkennung eines Nulldurchgangs (U1) ein sogenanntes CMOS-Gatter angeordnet ist.

5. Schaltwandler nach einem der Ansprüche 1 bis 4, **dadurch gekennzeichnet, dass** zur Erzeugung der Sägezahnspannung ein Oszillatorkondensator (C1) zwischen einen Frequenzgeneratoreingang (RT/CT) der PWM-Steuerung (PWM) und ein Bezugspotenzial (MP) geschaltet ist und dass eine Referenzspannung (VREF) über einen ersten Widerstand (R1) an dem Oszillatorkondensator (C1) zum Aufladen desselben anliegt.

6. Schaltwandler nach einem der Ansprüche 1 bis 5, **dadurch gekennzeichnet, dass** als Hochpass ein Kondensator (C2) in Reihe mit einem zweiten Widerstand (R2) angeordnet ist und der Ausgang des Hochpasses an einen Verbindungspunkt zwischen dem Oszillatorkondensator (C1) und einem Fußwiderstand (R3) des Oszillatorkondensators (C1) angeschlossen ist.

7. Schaltwandler nach Anspruch 5 oder 6, **dadurch gekennzeichnet, dass** der Oszillatorkondensator über ein weiteres Schaltelement (V2) an den Frequenzgeneratoreingang (RT/CT) der PWM-Steuerung (PWM) geschaltet ist, dass dieses weitere Schaltelement (V2) mit einer Einschaltfreigabeschaltung (EF) angesteuert ist und dass die Einschaltfreigabeschaltung (EF) mit dem Erkennungskreis zur Bestimmung einer abgeschlossenen Abmagnetisierung der Hauptwicklung (W1) verbunden ist.

8. Verfahren zum Betreiben eines Schaltwandlers im diskontinuierlichen Modus, wobei ein Schaltelement (S1) quasiresonant geschaltet wird, indem das Schaltelement (S1) dann eingeschaltet wird, wenn eine schwingende Spannung am Schaltelement (S1) ein Minimum aufweist **dadurch gekennzeichnet, dass durch** eine PWM-Steuerung (PWM) die Einschaltzeitpunkte des Schaltelements (S1) durch eine Schwellwerterreichung einer Sägezahnspannung bestimmt und mittels eines Erkennungskreises (NDE) erfasst wird, wann die schwingende Spannung am Schaltelement (S1) den Spannungsmittelwert durchläuft und dass ein entsprechendes Durchgangssignal durch die bauteilbedingte Verzögerung des Erkennungsskreises (NDE) und der PWM-Steuerung (PWM) verzögert und mittels eines Hochpasses gefiltert der Sägezahnspannung in der Weise überlagert wird, dass zu den Zeitpunkten eines Minimums der schwingenden Spannung am Schaltelement (S1) die Sägezahnspannung eine Spannungsspitze aufweist.

9. Verfahren nach Anspruch 8, **dadurch gekennzeichnet, dass** zur Erkennung eines Durchgangs der Spannung am Schaltelement (S1) durch den Spannungsmittelwert ein Nulldurchgang einer an einer mit der Hauptwicklung (W1) magnetisch gekoppelten Hilfswicklung (W2) anliegenden Hilfsspannung (U1) erfasst wird und dass die Sägezahnspannung mit einer Spannungsspitze eine Viertelperiode nach einem Nulldurchgang beaufschlagt wird.

10. Verfahren nach Anspruch 8 oder 9, **dadurch gekennzeichnet, dass** das Durchgangssignal einer Einschaltfreigabeschaltung (EF) zugeführt wird und dass nach jedem Abschalten des Schaltelements (S1) mittels Einschaltfreigabeschaltung (EF) überprüft wird, ob die Abmagnetisierung der Hauptwicklung (W1) abgeschlossen ist und dass erst nach einer abgeschlossenen Abmagnetisierung der Hauptwicklung (W1) die Sägezahnspannung mittels eines weiteren Schaltelements (V2) an die PWM-Steuerung (PWM) angeschaltet wird.

## Claims

1. Converter, comprising a main winding (W1), a PWM controller (PWM) and a switching element (S1), wherein the switching element (S1) switches quasi-resonantly in a discontinuous mode, **characterised in that** a recognition circuit (NDE) is provided for detecting a voltage on the switching element (S1), said recognition circuit being embodied to recognise the passages of voltage on the switching element (S1) through the voltage average value and to output a through signal, and that the PWM controller (PWM) is embodied such that a saw tooth voltage of the PWM controller (PWM) is applied with the through signal delayed by the component-related delay of the recognition circuit (NDE) and the PWM controller (PWM) and filtered by means of a high pass.

2. Converter according to claim 1, **characterised in that** an auxiliary winding (W2) is arranged coupled magnetically to the main winding (W1), on which the recognition circuit taps an auxiliary voltage (U1), which has a zero passage when the voltage on the switching element (S1) passes through the average value.

3. Converter according to claim 2, **characterised in that** a comparator for recognizing a zero passage is provided, which compares the auxiliary voltage (U1) with zero volts.

4. Converter according to claim 2, **characterised in that** what is known as a CMOS gate is arranged in order to recognise a zero passage (U1).

5. Converter according to one of claims 1 to 4, **characterised in that** in order to generate the saw tooth voltage an oscillator capacitor (C1) is switched between a frequency generator input (RT/CT) of the PWM controller (PWM) and a reference potential (MP) and that a reference voltage (VREF) is applied to the oscillator capacitor (C1) by means of a first resistor (R1) in order to charge the same.

6. Converter according to one of claims 1 to 5, **characterised in that** a capacitor (C2) is arranged in series with a second resistor (R2) as a high pass and the output of the high pass is connected to a connecting point between the oscillator capacitor (C1) and a base resistor (R3) of the oscillator capacitor (C1).

7. Converter according to claim 5 or 6, **characterised in that** the oscillator capacitor is connected by way of a further switching element (V2) to the frequency generator input (RT/CT) of the PWM controller (PWM), that this further switching element (V2) is activated with a switch release circuit (EF) and that the switch release circuit (EF) is connected to the recognition circuit in order to determine a completed demagnetization of the main winding (W1).

8. Method for operating a converter in discontinuous mode, wherein a switching element (S1) is switched quasi-resonantly, by the switching element (S1) being switched on if an oscillating voltage on the switching element (S1) has a minimum, **characterised in that** the switch-on times of the switching element (S1) is determined by a PWM controller (PWM) by means of reaching the threshold value of a saw tooth voltage and is detected by means of a recognition circuit (NDE), when the oscillating voltage on the switching element (S1) passes through the voltage mean value and that a corresponding through signal overlays the saw tooth voltage delayed by the component-related delay of the recognition circuit (NDE) and the PWM controller (PWM) and filtered by means of a high pass such that the saw tooth voltage has a voltage peak at the times of a minimum of the oscillating voltage on the switching element (S1).

9. Method according to claim 8, **characterised in that** in order to recognise a passage of the voltage on the switching element (S1) through the voltage mean value, a zero passage of an auxiliary voltage (U1) applied to an auxiliary winding (W2) coupled magnetically to the main winding (W1) is detected and the saw tooth voltage with a voltage peak is applied with a quarter cycle after a zero passage.

10. Method according to claim 8 or 9, **characterised in that** the through signal is fed to a switch release circuit (EF) and that after the switching element (S1) is switched off each time a switch release circuit (EF) is used to check whether the demagnetization of the main winding (W1) is completed and that the saw tooth voltage is connected to the PWM controller (PWM) by means of a further switching element (V2) only after a completed demagnetization of the main winding (W1).

## Revendications

1. Convertisseur comprenant un enroulement principal (W1), une commande PWM (PWM) et un élément de commutation (S1), cet élément de commutation (S1) commutant en mode discontinu à quasi-résonance, **caractérisé en ce que** pour la détection d'une tension sur l'élément de commutation (S1) un circuit de reconnaissance (NDE) est prévu, réalisé pour reconnaître les passages de la tension sur l'élément de commutation (S1) par la valeur moyenne de tension et à émettre un signal de passage, et **en ce que** la commande PWM (PWM) est réalisée pour qu'une tension en dent de scie de la commande PWM (PWM) est alimentée avec le signal de passage retardé par le retard conditionné par le composant du circuit de reconnaissance (NDE) et la commande PWM (PWM) et filtré au moyen d'un passe-haut.

2. Convertisseur selon la revendication 1, **caractérisé en ce qu'**un enroulement auxiliaire (W2) couplé magnétiquement avec l'enroulement principal (W1) est agencé, auquel le circuit de reconnaissance prélève une tension auxiliaire (U1) qui présente en cas de passage de la tension sur l'élément de commutation (S1) par la valeur moyenne, un passage au point zéro.

3. Convertisseur selon la revendication 2, **caractérisé en ce qu'**un comparateur est prévu pour la reconnaissance d'un passage au point zéro, lequel compare la tension auxiliaire (U1) avec zéro volt.

4. Convertisseur selon la revendication 2, **caractérisé en ce qu'**une porte dite porte CMOS est agencée pour la reconnaissance d'un passage au point zéro (U1).

5. Convertisseur selon l'une des revendications 1 à 4, **caractérisé en ce que**, pour produire la tension en dents de scie, un condensateur oscillateur (C1) est connecté entre une entrée de générateur de fréquence (RT/CT) de la commande PWM (PWM) et un potentiel de référence (MP) et **en ce qu'**une tension de référence (VREF) est présente par une première résistance (R1) sur le condensateur oscillateur (C1) pour la charge de celle-ci.

6. Convertisseur selon l'une des revendications 1 à 5, **caractérisé en ce qu'**un condensateur (C2) est agencé en série comme passe-haut avec une deuxième résistance (R2) et la sortie de ce passe-haut est connectée à un point de raccord entre le condensateur oscillateur (C1) et une résistance de pied (R3) du condensateur oscillateur (C1).

7. Convertisseur selon la revendication 5 ou 6, **caractérisé en ce que** le condensateur oscillateur est connecté par un autre élément de commutation (V2) à l'entrée du générateur de fréquence (RT/CT) de la commande PWM (PWM) **en ce que** cet autre élément de commutation (V2) est amorcé avec un circuit de libération d'enclenchement (EF) et **en ce que** ce circuit de libération d'enclenchement (EF) est raccordé avec le circuit de reconnaissance pour la détermination d'une démagnétisation terminée de l'enroulement principal (W1).

8. Procédé de fonctionnement d'un convertisseur en mode discontinu, un élément de commutation (S1) étant connecté à quasi-résonnance en ce que cet élément de commutation (S1) est enclenché seulement quand une tension oscillante sur l'élément de commutation (S1) présente un minimum, **caractérisé en ce que** par une commande PWM (PWM) les moments d'enclenchement de l'élément de commutation (S1) sont déterminés quand la valeur de seuil d'une tension en dents de scie est atteinte et sont détectés par un circuit de reconnaissance (NDE) quand la tension oscillante sur l'élément de commutation (S1) passe à travers la valeur moyenne de tension et **en ce qu'**un signal de passage correspondant retardé par le retard conditionné par le composant du circuit de reconnaissance (NDE) et de la commande PWM (PWM) et filtré au moyen d'un passe-haut, se superpose à la tension en dents de scie de manière qu'aux moments du minimum de la tension oscillante sur l'élément de commutation (S1), la tension en dents de scie présente un pic de tension.

9. Procédé selon la revendication 8, **caractérisé en ce que** pour la reconnaissance d'un passage de la tension sur l'élément de commutation (S1) par la valeur moyenne de tension, il est détecté un passage au point zéro d'une tension auxiliaire (U1) présente sur un enroulement auxiliaire (W2) couplé magnétiquement à l'enroulement principal (W1) et **en ce que** la tension en dents de scie est sollicitée avec le pic de tension d'un quart de période après un passage au point zéro.

10. Procédé selon la revendication 8 ou 9, **caractérisé en ce que** le signal de passage est amené à un circuit de libération d'enclenchement (EF) et **en ce qu'**après chaque arrêt de l'élément de commutation (S1) il est vérifié au moyen du circuit de libération d'enclenchement (EF) si la démagnétisation de l'enroulement principal (W1) est terminée et **en ce que** seulement après une démagnétisation terminée de l'enroulement principal (W1), la tension en dents de scie est activée au moyen d'un autre élément de commutation (V2) sur la commande PWM (PWM).
